# EUROPÄISCHE PATENTSCHRIFT

(11) **EP 1 646 268 B1**
(45) Veröffentlichungstag und Bekanntmachung des Hinweises auf die Patenterteilung: **08.10.2008**
(21) Anmeldenummer: 05022057.3
(22) Anmeldetag: 10.10.2005
(51) Int. Cl.: H05G 1/02, H01R 13/508, H01R 13/639, H01R 13/53, H05G 1/08, H02G 15/068

(54) **Spannvorrichtung für Hochspannungskabel**
Clamping device for high-voltage cable
Dispositif de serrage d'un câble haute tension

(30) Priorität: 08.10.2004 DE 102004049226
(43) Veröffentlichungstag der Anmeldung: 12.04.2006
(73) Patentinhaber: YXLON International X-Ray GmbH, 22419 Hamburg (DE)
(72) Erfinder: Brodersen, Peter, 22145 Hamburg (DE); Doll, Henning, 22177 Hamburg (DE); Niemann, Wilhelm, Dr., 22846 Norderstedt (DE)
(74) Vertreter: DTS München

(56) Entgegenhaltungen:
- EP-A- 0 060 930
- DE-C1- 4 425 421
- US-A- 4 266 841
- US-B1- 6 556 654

## Beschreibung

Die Erfindung befasst sich mit einer Spannvorrichtung für Hochspannungskabel, die zur Verbindung eines Hochspannungskabels mit einer Röntgenröhre bzw. einem Hochspannungsgerät dient.

Bei bekannten Hochspannungskabeln, die in Röntgenanlagen verwendet werden, müssen regelmäßig nach dem erstmaligen Einsetzen in den entsprechenden Konus einer Röntgenröhre bzw. eines Generators mehrfach Nachsetzungen durchgeführt werden. Dies kommt daher, dass der ausgeübte Anpressdruck auf den als Verbindungselement verwendeten Gummikonus durch die Veränderung der mechanischen Eigenschaften des Gummikonus nachlässt. Das für den Gummikonus verwendete Naturgummi setzt sich im Laufe der Zeit, und überschüssige Silikonmengen auf der so genannten Edelfuge werden verdrängt. Wenn keine formschlüssige Anpassung des Gummikonus mehr an den Isolator gegeben ist, entstehen Hochspannungsüberschläge innerhalb der Edelfuge, die zur Zerstörung des Hochspannungskabels und der Röntgenröhre bzw. des Generators führen können. Die Kontrolle des Anpressweges ist nur durch das Öffnen der Verbindung möglich, was zu einem sehr hohen Wartungsaufwand führt, insbesondere auch wegen der notwendigen Stilllegung der gesamten Röntgenanlage während dieser Zeit.

Es wurden deswegen wartungsfreie feste Verbindungen zwischen dem Hochspannungskabel und einem Gegenstecker vorgeschlagen. Dabei wird der Gummikonus des Hochspannungskabels in den Gegenstecker der Röhre einvulkanisiert und unter extrem hohen Druck gesetzt. Nachteilig daran ist jedoch, dass die Röntgenröhre und das Hochspannungskabel eine Einheit bilden, die im Servicefall zusammen getauscht werden muss, wodurch erhöhte Logistik- und Lagerkosten entstehen. Dies gilt insbesondere, wenn verschiedene Kabellängen verlangt werden.

Darüber hinaus ist es aus der US 6,556,654 B1, gemäß dem Oberbegriff des Anspruchs 1, bekannt, ein wartungsarmes gewinkeltes Hochspannungskabel mit einer Anpressfeder vorzusehen, die in den Kabelflansch integriert ist. Im Bereich der Anpressfeder ist ein mechanischer Zeiger eingebaut, der es ermöglicht, durch Ablesen einer Ortsangabe - die dem Federweg entspricht - den Status der Qualität der Hochspannungsverbindung ohne Öffnen der Verbindung zu überprüfen. Eine solche Lösung funktioniert jedoch nicht für die im industriellen Röntgenbereich verwendeten Standardkabel.

Schließlich ist aus der US 4,266,841 ein Hochspannungskabel bekannt, das mit einem rohrförmigen Isolierkörper fest verbunden ist. Unverlierbar mit diesem Isolierkörper ist ein Halteelement rohrförmig um das Hochspannungskabel herum angeordnet. Zwischen diesem Halteelement und dem Isolierkörper ist eine Schraubenfeder angeordnet, so dass beim Befestigen des Hochspannungskabels ein guter Kontakt hergestellt werden kann. Unverlierbar mit diesem Halteelement ist eine Gehäuseglocke in Form einer Mutter um die gesamte Anordnung herum ausgebildet. Diese Mutter wird beim Befestigen des Hochspannungskabels an einem Isolationselement des anderen Steckerteils festgezogen. Eine Sperre begrenzt die Entspannung der vorgespannten Feder, so dass das Hochspannungkskabel unverlierbar in dem Halteelement gehalten wird.

Aufgabe der Erfindung ist es deswegen, den Aufwand bei der Installation eines Hochspannungskabels zu minimieren, eine Kontrolle des Kabelzustandes ohne Öffnen der Verbindung zu gewährleisten sowie die Wartungsintervalle sehr lang zu halten.

Die Aufgabe wird durch eine Spannvorrichtung für Hochspannungskabel - im Folgenden wird diese kurz als Spannvorrichtung bezeichnet - mit den Merkmalen des Patentanspruchs 1 gelöst. Mittels einer solchen Spannvorrichtung wird ein Hochspannungskabel, das mit dieser verbindbar ist, aufgrund der Feder fest in den Isolator einer Röntgenröhre bzw. eines Generators gepresst. Durch das Anzeigeelement am Halteelement, das mit dem Hochspannungskabel verbindbar ist, kann die Spannung der Feder von außen abgelesen werden. Da die Feder das Hochspannungskabel umschließt und die Position des Anzeigeelements beim Setzen des Hochspannungskabels in den Isolator bekannt ist, kann die Änderung der Position der Feder über das Anzeigeelement im zeitlichen Verlauf von außen erkannt werden. Dadurch ist es nicht nötig, die Verbindungen zwischen Hochspannungskabel und Isolator zu Überprüfungszwecken zu öffnen. Ein Nachsetzen der Verbindungen ist nur dann nötig, wenn das Anzeigeelement eine gewisse Position überschritten hat, unter der die Anpresskraft der Feder unter einen vorgebbaren Wert sinkt und somit der Gummikonus des Hochspannungskabels nicht mehr formschlüssig im Isolator angepresst wird. Somit wird ein Nachsetzen der Verbindung erst nach langer Zeit nötig. Der Zeitpunkt kann sofort anhand des Anzeigeelements in sehr einfacher Art und Weise erkannt werden. Dadurch wird nicht nur das Wartungsintervall erhöht, sondern auch eine zuverlässige Anzeige erhalten, die einer Beschädigung des Hochspannungskabels bzw. der Röntgenröhre oder des Generators vorbeugt. Dadurch, dass das Halteelement Festlegemittel zur ortsfesten lösbaren Befestigung des Hochspannungskabels aufweist, ist es möglich, das Hochspannungskabel aus der Spannvorrichtung zu entfernen, wenn dieses defekt ist. Dadurch wird vermieden, dass auch eine noch intakte Spannvorrichtung in einem solchen Fall mit entsorgt werden muss. Außerdem können je nach Anwendungsfall in derselben Spannvorrichtung verschieden lange Hochspannungskabel eingesetzt werden, so dass ein modulares System erhalten wird. Dies führt insgesamt zu einer Kostenersparnis.

Eine vorteilhafte weiterbildung der Erfindung sieht vor, dass das Anzeigeelement mindestens eine Schaftschraube ist, die jeweils in einer parallel zur Mittellängsachse der Gehäuseglocke verlaufenden Durchbrechung der Gehäuseglocke läuft. Dies stellt eine sehr einfache Art und Weise einer Anzeige dar, die von außen wahrnehmbar ist. Darüber hinaus werden durch die Durchbrechung ein erster und ein zweiter Anschlag für das Anzeigeelement ausgebildet. Beim Setzen der Verbindung kann diese Verbindung so eingestellt werden, dass das Anzeigeelement am ersten Anschlag steht und mit der Zeit in Richtung des zweiten Anschlags läuft, wenn die Verbindung automatisch durch die Feder nachgestellt wird. Beispielsweise kann die Spannvorrichtung so ausgebildet sein, dass die Verbindung nachgesetzt werden muss, sobald das Anzeigeelement am zweiten Anschlag angelangt ist. Dies ist dann ein Signal für den Techniker, der die Anlage wartet. Dadurch kann wiederum eine Optimierung der Wartungsintervalle bei gleichzeitiger Sicherheit, dass keine Zerstörung bzw. Beschädigung der Anlage eintritt, gewährleistet werden.

Eine weitere vorteilhafte Weiterbildung der Erfindung sieht vor, dass das Anzeigeelement ein elektrischer, magnetischer oder Drucksensor ist, der die Position des Halteelements innerhalb der Gehäuseglocke erfasst. Durch diese unterschiedlichen Sensoren sind unterschiedliche Anwendungsfelder eröffnet, so dass die Verbindung noch besser überwacht werden kann. Die Überwachung ist dann nicht nur durch die optische Kontrolle aufgrund der Stellung des Anzeigeelements möglich, sondern die regelmäßig in elektrischer Form vorliegenden Signale der Sensoren können beispielsweise auf einen Bildschirm gegeben werden. Dort ist dann sehr gut eine Überwachung möglich, wobei die Anzeige sogar außerhalb einer eventuell vorhandenen Strahlenschutzkabine, um die Röntgenröhre herum, erfolgen kann. Damit ist selbst während des Betriebs der Röntgenröhre eine Überwachung der Verbindung möglich, so dass nicht mehr direkt an die Verbindung herangegangen werden muss, um dies vornehmen zu können.

Eine weitere vorteilhafte Weiterbildung der Erfindung sieht vor, dass der Drucksensor in das Halteelement integriert ist und an der Fläche, die mit der Feder in Kontakt steht, angeordnet ist. Dadurch ist in einer sehr einfachen Art und Weise die Ermittlung des Drucks, den die Feder auf das Halteelement ausübt, gegeben. Dieser Druck gibt - da das Halteelement mit dem Hochspannungskabel fest verbindbar ist - auch den Druck wieder, mit dem der Gummikonus des Hochspannungskabels in den Isolator der Röntgenröhre bzw. des Generators hineingepresst wird. Sobald der Druck unter einem vorgebbaren Wert fällt, ist dies ein Zeichen, die Verbindung nachzusetzen, damit keine Hochspannungsüberschläge an der Edelfuge auftreten können.

Eine weitere vorteilhafte Weiterbildung der Erfindung sieht vor, dass das Anzeigeelement mit einem Sicherheitsschalter oder einer Abstandsmessungsvorrichtung zusammenwirkt. Durch die Verwendung einer Abstandsmessvorrichtung wird erreicht, dass, wenn ein gewisser vorgebbarer Wert eines Abstandes unter- bzw. überschritten wird - je nachdem, wo die Abstandsmessvorrichtung in Bezug auf die Bewegungsrichtung des Anzeigeelements im Laufe der Zeit angebracht ist -, ein Nachsetzen der Verbindung nötig ist. Durch die Verwendung eines Sicherheitsschalters ist es sogar möglich, beim Erreichen eines vorgebbaren Werts automatisch eine Abschaltung des Generators vorzunehmen. Dadurch wird vermieden, dass eine nötige Neusetzung der Verbindung übersehen wird, so dass auf alle Fälle sichergestellt ist, dass bei ordnungsgemäßer Installation keine Hochspannungsüberschläge an der Edelfuge auftreten können.

Eine weitere vorteilhafte Weiterbildung der Erfindung sieht vor, dass das Festlegemittel als eine Gewindebuchse mit Innengewinde ausgebildet ist. Dadurch ist es möglich, ein Hochspannungskabel, das ebenfalls Befestigungsmittel in Form eines Außengewindes aufweist, mit dem Festlegemittel des Halteelements zu verschrauben. Dies stellt eine sehr einfache lösbare Verbindung dar, die auch noch in ihrem Abstand entlang der Mittellängsachse der Gehäuseglocke variiert werden kann. Dadurch ist beim Einstellen und Setzen der Verbindung eine größere Flexibilität gegeben.

Eine weitere vorteilhafte Weiterbildung der Erfindung sieht vor, dass die Gehäuseglocke verbindungsseitig einen umlaufenden Flansch aufweist, in dem mindestens zwei Schraublöcher parallel zur Mittellängsachse der Gehäuseglocke vorhanden sind. Dadurch ist eine sehr einfache Möglichkeit gegeben, dass das Hochspannungskabel in den Isolator durch Anziehen der Schrauben gepresst werden kann. Dies führt dazu, dass eine solche Verbindung leicht zu lösen und wieder nachzusetzen ist.

Weitere Vorteile und Einzelheiten der Erfindung werden anhand der in den Figuren dargestellten Ausführungsbeispiele im Folgenden beschrieben. Es zeigen im Einzelnen:
Figur 1 eine Verbindung zwischen einem Hochspannungskabel und einem Gegenstecker mit einem ersten Ausführungsbeispiel einer erfindungsgemäßen Spannvorrichtung, wobei ein gerades Hochspannungskabel verwendet wird,
Figur 2 ein zweites Ausführungsbeispiel einer erfindungsgemäßen Spannvorrichtung in einer Situation wie in Figur 1 dargestellt, wobei hier ein gewinkeltes Hochspannungskabel verwendet wird,
Figur 3 eine vergrößerte Darstellung des ersten Ausführungsbeispiels der Spannvorrichtung aus Figur 1 ohne Hochspannungskabel,
Figur 4 ein drittes Ausführungsbeispiel einer erfindungsgemäßen Spannvorrichtung mit einem Sicherheitsschalter,
Figur 5 ein viertes Ausführungsbeispiel einer erfindungsgemäßen Spannvorrichtung mit einer Abstandsmessvorrichtung und
Figur 6 ein fünftes Ausführungsbeispiel einer erfindungsgemäßen Spannvorrichtung mit einem Drucksensor.

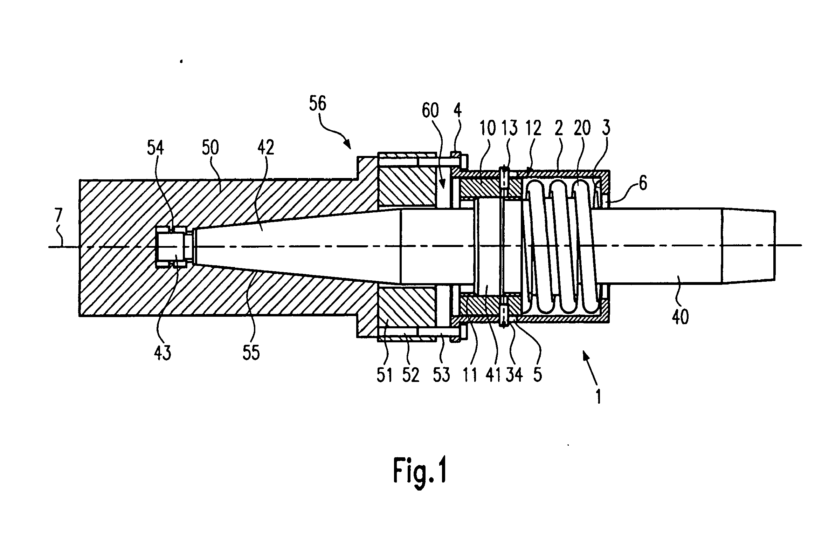

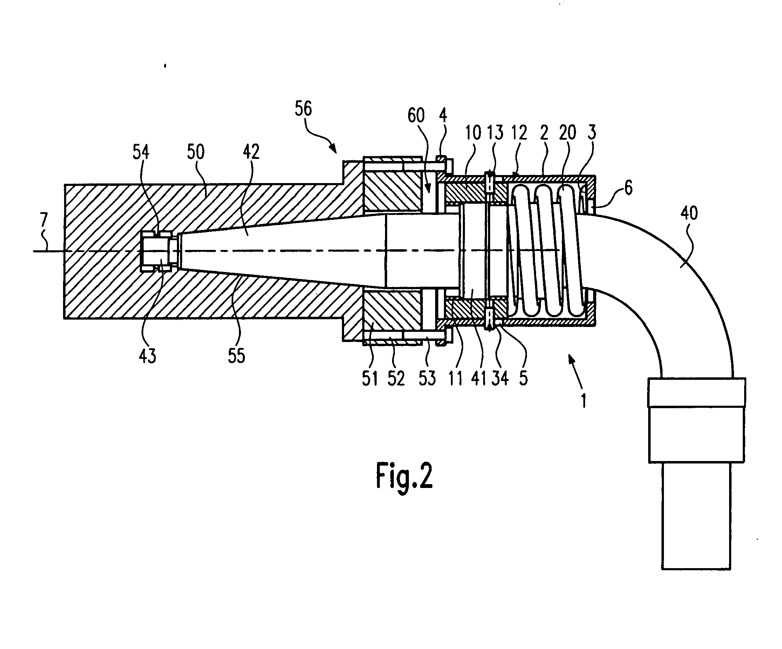

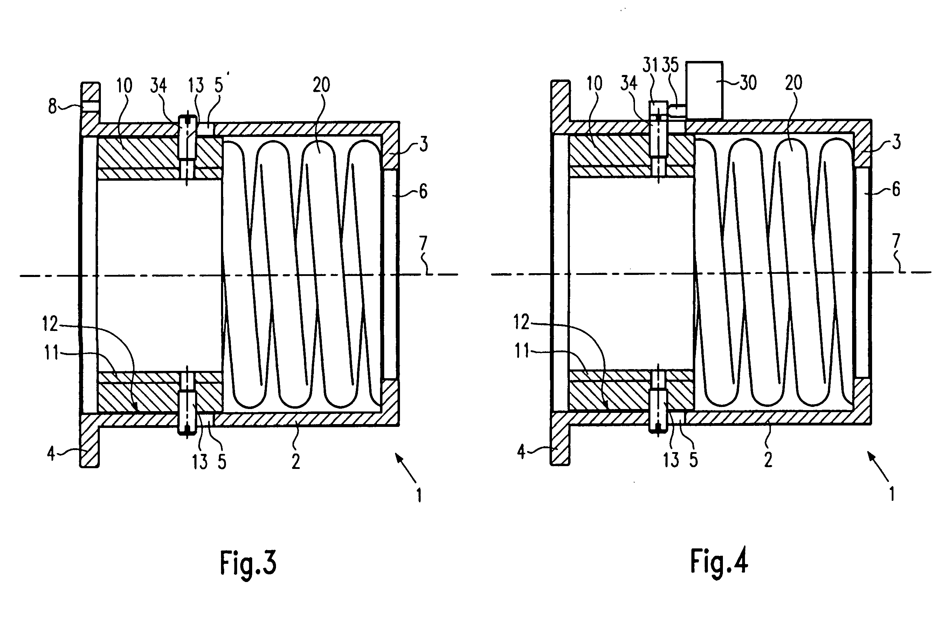

Figur 1 zeigt eine erfindungsgemäße Spannvorrichtung 1, in die ein Hochspannungskabel 40 eingesetzt ist, in einem Teilschnitt. Es handelt sich hierbei um ein gerades Standard-Hochspannungskabel (im Gegensatz zu dem in Figur 2 dargestellten abgewinkelten Standard-Hochspannungskabel). Das Hochspannungskabel 40 ist in einen Gegenstecker 56 eingesetzt. Der Gegenstecker 56 gehört entweder zu einem Generator oder zu einer Röntgenröhre. Im Folgenden wird davon ausgegangen, dass der Gegenstecker 56 zu einer Röntgenröhre (nicht dargestellt) gehört. Sämtliche Ausführungen gelten jedoch genauso für den Fall, dass der Gegenstecker 56 Teil des Generators ist. Die Figur 1 ist in Verbindung mit Figur 3 zu sehen, die eine vergrößerte Darstellung lediglich der Spannvorrichtung 1 ohne Hochspannungskabel 40 und Gegenstecker 56 zeigt.

Die elektrische Verbindung zwischen Gegenstecker 56 und Hochspannungskabel 40 wird über einen Federkontakt 54 am Gegenstecker 56 sowie einen Kontaktkopf 43 am Ende des Hochspannungskabels 40 hergestellt. Das Hochspannungskabel 40 weist zum Kontaktkopf 43 hin einen Gummikonus 42 auf, der in einen invers ausgebildeten Konus eines Isolators 50 am Gegenstecker 56 eingepresst wird. Diese beiden Teile müssen passgenau und formschlüssig ineinander gesteckt sein - zwischen ihnen ist die so genannte Edelfuge ausgebildet -, damit keine Hochspannungsüberschläge innerhalb der konischen Verbindung erfolgen, die zu einer Beschädigung bzw. Zerstörung des Hochspannungskabels 40, des Gegensteckers 50 oder der Röntgenröhre führen könnten. Die Edelfuge 55 wird darüber hinaus mit einer Silikonschicht ausgekleidet. Um den Formschluss zu erreichen, wird das Hochspannungskabel 40 mittels Schrauben 53, die im Schraubgewinde 52 am Isolatorflansch 51 eingeschraubt werden, eingepresst. Durch das Anziehen der Schrauben 53 wird die Fuge 60 zwischen der Spannvorrichtung 1 und dem Gegenstecker 56 verringert.

Nach dem Setzen der Verbindung wird im Laufe der Zeit die formschlüssige Verbindung zwischen dem Gummikonus 42 des Hochspannungskabels 40 und dem inversen Konus des Isolators 50 aufgrund des Setzens des Naturgummis des Gummikonus 42 schlechter. Um dies zu verhindern, ist die dargestellte erfindungsgemäße Spannvorrichtung 1 vorgesehen. Sie weist eine Gehäuseglocke 2 auf, die im Wesentlichen röhrenförmig ausgebildet ist. An ihrem dem Gegenstecker 56 zugewandten Ende weist die Gehäuseglocke 2 einen rundum laufenden Flansch 4 auf, der eine Öffnung begrenzt. An ihrem entgegengesetzten Ende weist die Gehäuseglocke 2 einen Anschlag 3 auf, der eine Kabelöffnung 6 begrenzt. Die Kabelöffnung 6 ist wegen des sie begrenzenden Anschlags 3 kleiner ausgebildet als die gegensteckerseitige Öffnung.

Der Flansch 4 weist mindestens ein Schraubloch 8 (siehe Figur 3) auf, durch das die Spannvorrichtung 1 mit darin angebrachtem Hochspannungskabel 40 mit dem Isolatorflansch 51 des Gegensteckers 56 verschraubt wird. Regelmäßig sind mindestens zwei, unter Umständen sogar drei bis vier oder mehr Schraublöcher 8 vorhanden, damit eine gute Verbindung zustande kommt.

Innerhalb der röhrenförmigen Gehäuseglocke 2 ist ein Halteelement 10 angeordnet. Das Halteelement 10 ist ebenfalls röhrenförmig ausgebildet und entlang der Mittellängsachse 7 der Gehäuseglocke 2 an deren Innenwand 12 beweglich in dieser angeordnet. Zwischen dem Halteelement 10 und dem Anschlag 3 der Gehäuseglocke 2 ist eine Schraubenfeder 20 angeordnet. Diese ist auf einen hohen Druck (beispielsweise 1000 N) vorgespannt. Gegensteckerseitig sind die Gehäuseglocke 2 und/oder das Halteelement 10 so ausgebildet, dass die unter hoher Vorspannung stehende Schraubenfeder 20 das Halteelement 10 nicht aus der Gehäuseglocke 2 herausdrücken kann (die konkreten Elemente sind nicht dargestellt, da sie nicht erfindungswesentlich sind).

Die Innenfläche des Halteelements 10 weist ein Innengewinde 11 auf, das mit einem Außengewinde 41 des Hochspannungskabels 40 in Eingriff steht. Die Lage des Hochspannungskabels 40 kann dadurch in Richtung der Mittellängsachse 7 durch mehr oder weniger weites Einschrauben seines Außengewindes 41 in das Innengewinde 11 des Halteelements 1 verändert werden. Dies hilft, die Verbindung zwischen Hochspannungskabel 40 und Gegenstecker 56 optimal zu setzen.

Zum Setzen dieser Verbindung wird der Gummikonus 42 des Hochspannungskabels 40 in den Isolator 50 des Gegensteckers 56 eingeschoben. Mittels der Schrauben 53 wird die Fuge 60 so weit verkleinert, dass eine formschlüssige Verbindung zwischen dem Gummikonus 42 und dem inversen Konus des Isolators 50 hergestellt ist, so dass die Edelfuge 55 vollkommen geschlossen ist.

Beim Festziehen der Schrauben 53 kann sich der Gummikonus 42 ab einer bestimmten Stellung nicht mehr weiter in Richtung der Mittellängsachse 7 in den Gegenstecker 56 hineinbewegen. Wird die Fuge 60 weiterhin durch Eindrehen der Schrauben 53 verringert, so wandert die Gehäuseglocke 2 in Relation zu dem nun ortsfesten Halteelement 10 in Richtung des Isolatorflansches 51. Dadurch wird die Spannung der Schraubenfeder 20 weiter erhöht, da diese zusammengedrückt wird.

Am Halteelement 10 sind zwei sich gegenüberliegende Schaftschrauben 13 als Anzeigeelemente 34 angeordnet. Diese stehen durch jeweils eine Durchbrechung 5 in der Gehäuseglocke 2 heraus. Beim Verringern der Fuge 60 bewegen sich diese Schaftschrauben 13 somit von links nach rechts. Es versteht sich von selbst, dass auch nur eine Schaftschraube 13 bzw. mehr als zwei Schaftschrauben 13 mit jeweils dazugehörigen Durchbrechungen 5 in der Gehäuseglocke 2 vorgesehen sein können. Im fertig montierten Zustand der Verbindung schlagen die Schaftschrauben 13 beispielsweise am rechten Ende der Durchbrechung 5 der Gehäuseglocke 2 an. Da die Schaftschrauben 13 über das Halteelement 10 indirekt mit der Schraubenfeder 20 in Kontakt stehen und somit deren Länge angeben, kann über die Position der Schaftschrauben 13 auf die Federkraft der Schraubenfeder 20 geschlossen werden.

Im Laufe der Zeit setzt sich das Naturgummi des Gummikonus 42, so dass die Schraubenfeder 20 weniger Gegendruck verspürt und ihre Länge vergrößert. Dadurch schiebt sie das Halteelement 10 samt daran befindlichen Schaftschrauben 13 von rechts nach links in Richtung des linken Endes der Durchbrechungen 5 in der Gehäuseglocke 2. Anhand von Markierungen an der Außenwand der Gehäuseglocke 2 im Bereich der Durchbrechungen 5 kann somit der Anpressdruck des Hochspannungskabels 40 im Gegenstecker 56 abgelesen werden. Erreicht dieser Druck eine vorgebbare Untergrenze, beispielsweise kann dies der Fall sein, wenn die Schaftschrauben 13 das linke Ende der Durchbrechungen 5 erreicht haben, ist dies ein Signal, dass damit gerechnet werden muss, dass die Verbindung nicht mehr einwandfrei, d.h. formschlüssig ist. Um eventuelle Schäden durch Hochspannungsüberschläge an der Edelfuge 55 zu verhindern, ist dann ein Nachsetzen der Verbindung nötig.

Durch das erfindungsgemäße erste Ausführungsbeispiel einer Spannvorrichtung 1 wird somit eine sichere Überwachung der Güte der Verbindung auf einfachste Art und Weise gewährleistet. Nach der erstmaligen Installation ist ein Nachsetzen nur in Ausnahmefällen notwendig. Die Wartungsintervalle werden dadurch sehr lang gehalten, da das Nachsetzen bis zu einem bestimmten Grad automatisch durch den Federdruck erfolgt.

Die in Figur 2 dargestellte Verbindung unterscheidet sich nur in wenigen Details von der in Figur 1 dargestellten Verbindung, so dass im Folgenden nur auf die Unterschiede zu Figur 1 eingegangen wird. Gleiche bzw. funktionsgleiche Teile sind mit dem gleichen Bezugszeichen bezeichnet.

Am auffälligsten ist der Unterschied des verwendeten Hochspannungskabels 40. Im Gegensatz zu dem in Figur 1 verwendeten geraden Standard-Hochspannungskabel wird hier ein abgewinkeltes Standard-Hochspannungskabel verwendet. Der Gegenstecker 56 ist prinzipiell gleich aufgebaut, weist jedoch Unterschiede in der konkreten Ausgestaltung auf. Da diese jedoch nicht erfindungswesentlich sind, wird im Folgenden nicht darauf eingegangen.

Die Gehäuseglocke 2 der Spannvorrichtung 1 ist gleich zu der in Figur 1 dargestellten ausgeführt. Der Flansch 4 am gegensteckerseitigen Ende könnte aber auch nicht umlaufend ausgeführt sein (gilt genauso für das in Figur 1 dargestellte gerade Standard-Hochspannungskabel), sondern sich lediglich über einen Teil des Umfangs erstrecken. Im Extremfall würden dann die Schrauben 53 lediglich noch durch Ohren geführt. Dies ist dann sinnvoll, wenn die räumlichen Gegebenheiten beengt sind und der Flansch 4 teilweise im Weg ist. Von der Wirkungsweise her macht dies jedoch keinen Unterschied zu dem dargestellten umlaufenden Flansch 4.

In Figur 4 ist ein drittes Ausführungsbeispiel einer erfindungsgemäßen Spannvorrichtung 1 dargestellt. Diese unterscheidet sich lediglich in der Art der verwendeten Anzeigeelemente 34 von dem ersten Ausführungsbeispiel, das in den Figuren 1 und 3 dargestellt ist. Im Folgenden wird deswegen nur auf die unterschiedlich ausgebildeten Anzeigeelemente 34 eingegangen.

Einer der beiden Schaftschrauben 13 ist verlängert, so dass sie die Form eines Betätigungsstiftes 31 hat, der ein Stück weit über die Oberfläche der Gehäuseglocke 2 herausragt. Der Betätigungsstift 31 wirkt mit einem an der Außenfläche der Gehäuseglocke 2 im Anschluss an das rechte Ende der Durchbrechung 2 angeordneten Sicherheitsschalter 30 zusammen. Hierbei betätigt der Betätigungsstift 31 einen Auslösestift 35.

Im frisch gesetzten Zustand der Verbindung befindet sich der Betätigungsstift 31 am rechten Ende der Durchbrechung 5, so dass der Auslösestift 35 vollständig in den Sicherheitsschalter 30 eingedrückt ist. Setzt sich das Gummi des Gummikonus 42, so drückt die Schraubenfeder 20 den Betätigungsstift 31 in Richtung des linken Endes der Durchbrechung 5. Dabei folgt ihm der Auslösestift 35 durch geeignete (nicht erfindungswesentliche) Elemente. Ist der Abstand zwischen dem Betätigungsstift 31 und dem Sicherheitsschalter 30 so groß, dass ein vorher festlegbarer Wert überschritten ist, wird durch das Zusammenspiel des Auslösestiftes 35 mit dem Sicherheitsschalter 30 ein elektrisches Signal ausgelöst. Dieses wird beispielsweise über eine elektrische Leitung zu einem Monitor (beides nicht gezeigt) geführt, so dass der Bediener der Röntgenröhre dies sofort wahrnimmt. Genauso gut ist es möglich, dass solange der Auslösestift 35 Kontakt hat, ein Sicherheitskreis geschlossen ist, der geöffnet wird, sobald der Kontakt unterbrochen wird. Dies führt dann zu einem sofortigen Abschalten der Hochspannung an der Röntgenröhre, um eine Beschädigung von einzelnen Teilen oder der gesamten Anordnung zu verhindern.

Eine andere Möglichkeit ist es auch, dass beim Auslösen des Sicherheitsschalters 30 sofort der Generator ausgeschaltet wird, so dass in keinem Fall eine Beschädigung durch Hochspannungsüberschläge innerhalb der Edelfuge 55 (siehe Figuren 1 und 2) erfolgen kann. Dadurch wird die Lebensdauer der gesamten Anordnung, also der Röntgenröhre sowie des Hochspannungskabels 40 und des Generators verlängert. Darüber hinaus wird auch das Wartungsintervall optimiert, da erst bei einer Unterschreitung des vorgegebenen Drucks der Schraubenfeder 20 das Auslösen des Sicherheitsschalters 30 erfolgt und bis dahin ein reibungsfreier Betrieb der Anlage gewährleistet ist.

Es ist genauso gut möglich, den Sicherheitsschalter 30 im Bereich des linken Endes der Durchbrechung 5 auf der Gehäuseglocke 2 anzuordnen. Dann muss der Sicherheitsschalter 30 so ausgelegt sein, dass beim Einschieben des Auslösestiftes 35 durch den Betätigungsstift 31 ab einem gewissen Grad des Einschiebens die Auslösung erfolgt.

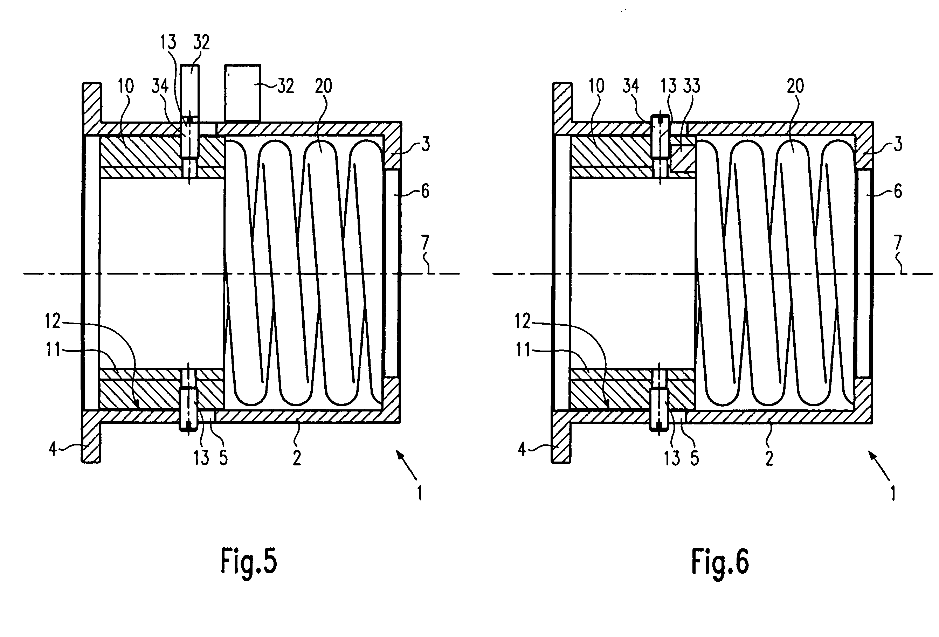

Das in Figur 5 dargestellte vierte Ausführungsbeispiel einer erfindungsgemäßen Spannvorrichtung 1 unterscheidet sich von derjenigen in Figur 4 dargestellten lediglich dadurch, dass anstatt eines Sicherheitsschalters 30 mit zugehörigen Elementen eine Abstandsmessvorrichtung 32 verwendet wird. Die Abstandsmessung geschieht hierbei über bekannte Methoden und Vorrichtungen, die nicht erfindungswesentlich sind und deswegen nicht näher erläutert werden.

Setzt sich der Gummi des Gummikonus 42, so bewegt sich der als Anzeigeelement 41 ausgestaltete bewegliche Teil der Abstandsmessvorrichtung 32 nach links, so dass der Abstand zum ortsfesten, auf der Außenfläche der Gehäuseglocke 2 angebrachten Teil der Abstandsmessvorrichtung 32 vergrößert wird. Überschreitet dieser Abstand einen vorgebaren Wert - was einem Unterschreiten eines zugeordneten Spannungswertes der Schraubenfeder 20 entspricht -, so wird ein elektrisches Signal ausgelöst und die gleichen wie zu Figur 4 beschrieben Aktionen werden ausgelöst. Zusätzlich zu dem Auslösen eines Alarms beim Überschreiten eines gewissen Abstandes - wie im dargestellten Fall - kann auch ein Auslösen des Alarms bei Unterschreiten eines vorgebbaren Abstandes erfolgen. Dabei muss der ortsfeste Teil der Abstandsmessvorrichtung 32 nicht rechts der Durchbrechung 5 sondern links der Durchbrechung 5 angeordnet sein. Prinzipiell ist dies genauso zu betrachten, wie das in Figur 4 dargestellte Ausführungsbeispiel.

In Figur 6 ist im Rahmen eines fünften Ausführungsbeispiels einer erfindungsgemäßen Spannvorrichtung 1 zusätzlich zu den Schaftschrauben 13 ein Drucksensor 33 als Anzeigeelement 34 dargestellt. Der Drucksensor 33 ist in der Abschlusswandung des Halteelements 10 angeordnet, die dem Anschlag 3 gegenüberliegt. Somit wirkt die Schraubenfeder 20 direkt auf den Drucksensor 33 und gewährleistet eine zuverlässige Bestimmung des Drucks der Schraubenfeder 20. Da der Druck der Schraubenfeder 20 ein Maß für die Güte der Verbindung darstellt (siehe Beschreibung zu Figur 1), kann bei der Unterschreitung eines vorgebbaren Drucks eine der zu den vorgenannten Ausführungsbeispielen genannten Aktion erfolgen. Beispielsweise wird der Druckabfall unter einen vorgebbaren Grenzwert dem Bediener auf einem Monitor angezeigt oder es erfolgt eine automatische Abschaltung des Generators.

Bei den drei in Figuren 4 bis 6 dargestellten Ausführungsbeispielen ist zusätzlich zu den Anzeigeelementen 34 in Form von Sensoren (Sicherheitsschalter 30, Abstandsmessvorrichtung 32 und Drucksensor 33) auch noch die Möglichkeit der optischen Kontrolle über die Schaftschrauben 13 gewährleistet. Dadurch ist eine zusätzliche Sicherheit gegeben, falls der eine oder andere Sensor ausfallen sollte. Es versteht sich von selbst, dass die dargestellten Schaftschrauben 13 nur optional sind und die Erfindung schon durch den jeweiligen Sensor verwirklicht wird. Für den Fachmann ist es darüber hinaus klar, dass auch eine Kombination von zweien oder mehreren der vorgenannten Sensoren möglich ist. Dadurch wird die Zuverlässigkeit und Sicherheit noch einmal gesteigert, so dass die Gefahr einer Beschädigung der Anlage noch weiter abgesenkt werden kann.

Durch die Verwendung von Sensoren ist es darüber hinaus möglich, die gemessenen Werte zwischen den definierten Wartungsterminen fortzuschreiben und somit Diagramme zu erstellen, die einen Aufschluss über das Setzverhalten des Gummikonus 42 bzw. das Gesamtverhalten der Verbindung gibt.

Zusammenfassend kann festgehalten werden, dass durch die erfindungsgemäße Spannvorrichtung 1 der Aufwand bei der Installation und Wartung eines Hochspannungskabels 40 minimiert wird. Zwar ist weiterhin eine Kontrolle des Kabelzustandes notwendig, allerdings ist ein Nachsetzen des Kabels nur bei entsprechender Anzeige notwendig. Die Wartungsintervalle bei Verwendung einer erfindungsgemäßen Spannvorrichtung 1 sind sehr lange, da ein automatisches Nachsetzen durch den Federdruck erfolgt. Innerhalb eines vorgegebenen (langen) Wartungsintervalls ist ein Nachsetzen nur dann erforderlich, wenn die optische Anzeige bzw. die Sensorik dies ergibt. Es können auch wichtige Informationen über den Stand der Hochspannungsverbindung ohne Öffnen dieser erhalten werden, die sowohl den Bediener der Anlage als auch einem Servicetechniker zugänglich gemacht werden können. Diese Informationen können auch dem Röntgengesamtsystem zur Verfügung gestellt werden, wobei dort eine Weiterverarbeitung erfolgen kann. Dies ist beispielsweise für Diagnose- und Schutzmaßnahmen wichtig, so dass eine automatische Abschaltung beim Erreichen eines vorgegebenen Grenzwertes für die Federspannung bzw. die örtliche Stellung des Anzeigeelements 34 erfolgt. Im Ergebnis lässt sich dadurch die Zahl der Reparaturfälle minimieren, die nach Hochspannungsüberschlägen auf der Edelfuge 55 vorzunehmen sind.

### Bezugszeichenliste

- 1: Spannvorrichtung für Hochspannungskabel
- 2: Gehäuseglocke
- 3: Anschlag
- 4: Flansch
- 5: Durchbrechung
- 6: Kabelöffnung
- 7: Mittellängsachse
- 8: Schraubloch
- 10: Halteelement
- 11: Innengewinde
- 12: Innenwand
- 13: Schaftschraube
- 20: Feder, Schraubenfeder
- 30: Sicherheitsschalter
- 31: Betätigungsstift
- 32: Abstandsmessvorrichtung
- 33: Drucksensor
- 34: Anzeigeelement
- 35: Auslösestift
- 40: Hochspannungskabel
- 41: Außengewinde
- 42: Gummikonus
- 43: Kontaktkopf
- 50: Isolator
- 51: Isolatorflansch
- 52: Schraubgewinde
- 53: Schraube
- 54: Federkontakt
- 55: Edelfuge
- 56: Gegenstecker
- 60: Fuge

## Patentansprüche

1. Spannvorrichtung (1) für Hochspannungskabel (40) mit einer im Wesentlichen rohrförmigen Gehäuseglocke (2), in der ein rohrförmiges Halteelement (10) für ein Hochspannungskabel (40) beweglich entlang der Mittellängsachse (7) der Gehäuseglocke (2) angeordnet ist, und mit einer Feder (20), die zwischen einem Anschlag (3) in der Gehäuseglocke (2) und dem Halteelement (10) angeordnet ist und das Halteelement (10) entlang der Mittellängsachse (7) vom Anschlag (3) wegdrückt, **dadurch gekennzeichnet, dass** das Halteelement (10) Festlegemittel zur ortsfesten lösbaren Befestigung des Hochspannungskabels (40) aufweist und an dem Halteelement (10) ein Anzeigeelement (34) angeordnet ist, so dass von außen die Spannung der Feder (20) erkennbar ist, und die Feder (20) das Hochspannungskabel (40) umschließt.

2. Spannvorrichtung (1) nach Anspruch 1, **dadurch gekennzeichnet, dass** das Anzeigelement (34) mindestens eine Schaftschraube (13) ist, die jeweils in einer parallel zur Mittellängsachse (7) der Gehäuseglocke (2) verlaufenden Durchbrechung (5) der Gehäuseglocke (2) läuft.

3. Spannvorrichtung (1) nach Anspruch 1, **dadurch gekennzeichnet, dass** das Anzeigeelement (34) ein elektrischer, magnetischer oder Drucksensor (33) ist, der die Position des Halteelements (10) innerhalb der Gehäuseglocke (2) erfasst.

4. Spannvorrichtung (1) nach Anspruch 3, **dadurch gekennzeichnet, dass** der Drucksensor (33) in das Halteelement (10) integriert ist und an der Fläche, die mit der Feder (20) in Kontakt steht, angeordnet ist.

5. Spannvorrichtung (1) nach einem der Ansprüche 1 bis 4, **dadurch gekennzeichnet, dass** das Anzeigeelement (34) mit einem Sicherheitsschalter (30) oder einer Abstandsmessvorrichtung (32) zusammenwirkt.

6. Spannvorrichtung (1) nach einem der vorstehenden Ansprüche, **dadurch gekennzeichnet, dass** das Festlegemittel als eine Gewindebuchse mit Innengewinde ausgebildet ist.

7. Spannvorrichtung (1) nach einem der Ansprüche 1 bis 6, **dadurch gekennzeichnet, dass** ein Hochspannungskabel (40) in das Halteelement (10) eingesetzt ist.

8. Spannvorrichtung (1) nach Anspruch 7, **dadurch gekennzeichnet, dass** das Hochspannungskabel (40) Befestigungsmittel aufweist, über die es mit dem Festlegemittel des Halteelements (10) verbunden ist.

9. Spannvorrichtung (1) nach Anspruch 8, **dadurch gekennzeichnet, dass** das Befestigungsmittel ein Außengewinde (41) ist.

10. Spannvorrichtung (1) nach einem der Ansprüche 1 bis 9, **dadurch gekennzeichnet, dass** die Gehäuseglocke (2) verbindungsseitig einen umlaufenden Flansch (4) aufweist, in dem mindestens zwei Schraublöcher (8) parallel zur Mittellängsachse (7) der Gehäuseglocke (2) vorhanden sind.

## Claims

1. Clamping device (1) for power cables (40) with an essentially tubular bell housing (2) in which a tubular holding element (10) for a power cable (40) is arranged mobile along the central longitudinal axis (7) of the bell housing (2), and with a spring (20) which is arranged between a stop (3) in the bell housing (2) and the holding element (10) and pushes the holding element (10) away from the stop (3) along the central longitudinal axis (7), **characterized in that** the holding element (10) has fixing means for the fixed releasable securing of the power cable (40) and a display element (34) is arranged at the holding element (10), so that the tension of the spring (20) is visible from outside, and the spring (20) surrounds the power cable (40).

2. Clamping device (1) according to claim 1, **characterized in that** the display element (34) is at least one headless screw (13) which in each case lies in an opening (5) of the bell housing (2) running parallel to the central longitudinal axis (7) of the bell housing (2).

3. Clamping device (1) according to claim 1, **characterized in that** the display element (34) is an electric, magnetic or pressure sensor (33) which records the position of the holding element (10) inside the bell housing (2).

4. Clamping device (1) according to claim 3, **characterized in that** the pressure sensor (33) is integrated into the holding element (10) and is arranged at the surface which is in contact with the spring (20).

5. Clamping device (1) according to one of claims 1 to 4, **characterized in that** the display element (34) interacts with a safety switch (30) or a distance-measurement device (32).

6. Clamping device (1) according to one of the preceding claims, **characterized in that** the fixing means is developed as a threaded bush with an internal thread.

7. Clamping device (1) according to one of claims 1 to 6, **characterized in that** a power cable (40) is inserted into the holding element (10).

8. Clamping device (1) according to claim 7, **characterized in that** the power cable (40) has securing means via which it is connected to the fixing means of the holding element (10).

9. Clamping device (1) according to claim 8, **characterized in that** the securing means is an external thread (41).

10. Clamping device (1) according to one of claims 1 to 9, **characterized in that** on the connection side the bell housing (2) has a circumferential flange (4) in which there are at least two screw holes (8) parallel to the central longitudinal axis (7) of the bell housing (2).

## Revendications

1. Dispositif de serrage (1) de câble haute tension (40) muni d'une cloche de boîtier (2) pour l'essentiel en forme de tube dans laquelle un élément de retenue (10) en forme de tube est disposé pour un câble haute tension (40) de façon mobile le long de l'axe longitudinal médian (7) de la cloche de boîtier (2) et muni d'un ressort (20) disposé entre une butée (3) disposée dans la cloche de boîtier (2) et l'élément de retenue (10) et qui comprime l'élément de retenue (10) le long de l'axe longitudinal médian (7) depuis la butée (3), **caractérisé en ce que** l'élément de retenue (10) présente un moyen de fixation pour la fixation amovible fixe du câble haute tension (40) et qu'un élément indicateur (34) est disposé sur l'élément de retenue (10), de sorte que la tension du ressort (20) peut être visible de l'extérieur et que le ressort (20) entoure le câble haute tension (40).

2. Dispositif de serrage (1) selon la revendication 1, **caractérisé en ce que** l'élément indicateur (34) est au moins une vis sans tête (13) s'étendant respectivement dans un évidement (5) de la cloche de boîtier (2) qui s'étend parallèlement à l'axe longitudinal médian (7) de la cloche de boîtier (2).

3. Dispositif de serrage (1) selon la revendication 1, **caractérisé en ce que** l'élément indicateur (34) est un détecteur électrique ou magnétique ou un détecteur de pression (33) qui détecte la position de l'élément de retenue (10) à l'intérieur de la cloche de boîtier (2).

4. Dispositif de serrage (1) selon la revendication 3, **caractérisé en ce que** le détecteur de pression (33) est intégré dans l'élément de retenue (10) et est disposé sur la surface en contact avec le ressort (20).

5. Dispositif de serrage (1) selon l'une quelconque des revendications 1 à 4, **caractérisé en ce que** l'élément indicateur (34) entre en interaction avec un commutateur de sécurité (30) ou un dispositif de mesure d'écartement (32).

6. Dispositif de serrage (1) selon l'une quelconque des revendications précédentes, **caractérisé en ce que** le moyen de fixation prend la forme d'une douille filetée à filetage intérieur.

7. Dispositif de serrage (1) selon l'une quelconque des revendications 1 à 6, **caractérisé en ce qu'**un câble haute tension (40) est inséré dans l'élément de retenue (10).

8. Dispositif de serrage (1) selon la revendication 7, **caractérisé en ce que** le câble haute tension (40) présente un moyen de fixation par l'intermédiaire duquel il est relié au moyen de fixation de l'élément de retenue (10).

9. Dispositif de serrage (1) selon la revendication 8, **caractérisé en ce que** le moyen de fixation est un filetage extérieur (41).

10. Dispositif de serrage (1) selon l'une quelconque des revendications 1 à 9, **caractérisé en ce que** la cloche de boîtier (2) présente côté jonction une bride enveloppante (4) comportant au moins deux trous de vis (8) parallèles à l'axe longitudinal médian (7) de la cloche de boîtier (2).
